Europäisches Patentamt

European Patent Office

Office européen des brevets

(11) Publication number : **0 581 611 A2**

# (12) EUROPEAN PATENT APPLICATION

(21) Application number : **93306063.4**

(22) Date of filing : **30.07.93**

(51) Int. Cl.⁵ : **C08F 4/656,** C08F 10/00

(30) Priority : **30.07.92 JP 243965/92**

(43) Date of publication of application :
**02.02.94 Bulletin 94/05**

(84) Designated Contracting States :
**DE NL**

(71) Applicant : **NIPPON OIL Co. Ltd.**
**3-12, Nishi-Shimbashi 1-chome**
**Minato-ku Tokyo (JP)**

(72) Inventor : **Shiraishi, Takeichi**
**2-18-3, Hama-cho, Kawasaki-ku**
**Kawasaki-shi, Kanagawa-ken (JP)**
Inventor : **Matsuura, Kazuo**
**207-27, Akiba-cho, Totsuku-ku**
**Yokohama-shi, Kanagawa-ken (JP)**
Inventor : **Kamiishi, Hirohumi**
**1053-11, Nakada-cho, Izumi-ku**
**Yokohama-shi, Kanagawa-ken (JP)**

(74) Representative : **Cropp, John Anthony David**
**MATHYS & SQUIRE 10 Fleet Street**
**London, EC4Y 1AY (GB)**

(54) Process for preparing polyolefins.

(57) A process for preparing a polyolefin high in bulk density, narrow in particle size distribution, superior in fluidity and with no formation of coarse particles is provided.

In a process of preparing a polyolefin by homopolymerzing or copolymerizing an olefin or olefins in the presence of a catalyst containing a solid catalyst component and an organometallic compound as essential components, there is used as the said solid catalyst component a material obtained by contacting the following components [A], [B] and [C] with one another :

[A] a reaction product resulting from a contact reaction of a magnesium halide and a titanium compound represented by the general formula $Ti(OR^1)_4$ where $R^1$ is a hydrocarbon group having 1 to 20 carbon atoms ;

[B] a reaction product resulting from a contact reaction of an aluminum halide and silicon compound represented by the general formula $Si(OR^2)_4$ where $R^2$ is a hydrocarbon group having 1 to 20 carbon atoms ; and

[C] an organoaluminum compound represented by the general formula $AlR^3_nX_{3-n}$ where $R^3$ is a hydrocarbon group having 1 to 20 carbon atoms, X is a halogen atom and n is $0 < n \leq 3$.

EP 0 581 611 A2

## BACKGROUND OF THE INVENTION

The present invention relates to a process for preparing polyolefins and more particularly to a process of preparing polyolefins high in bulk density, narrow in particle size distribution, superior in fluidity and with no formation of coarse particles, this is achieved by using a catalyst containing a specific solid catalyst component and an organometallic compound as essential components.

As conventional methods for the production of polyolefins, particularly ultra-high molecular weight polyethylenes, there have been known various methods using a catalyst comprising an inorganic magnesium compound such as magnesium halide, magnesium oxide or magnesium hydroxide as a carrier and a transition metal compound such as a titanium or vanadium compound supported on the carrier. According to these conventional methods, however, the resulting ultra-high molecular weight polyethylenes are generally low in bulk density and wide in particle size distribution; besides, the formation of coarse particles is often observed.

Consequently, in such conventional methods, there occur lowering of productivity and blocking of the polymer withdrawing line. In the case of applying such ultra-high molecular weight polyethylenes to various molding uses, there often have occurred problems such as unevenness in the polymer filling, deterioration of strength and surface roughening.

The present inventors have already proposed a process for preparing an ultra-high molecular weight polyethylene using a specific catalyst (see, for example, Japanese Patent Laid Open Nos. JP1-129006A and JP2-70710A and Japanese Patent Application No. 266421/1990). But a further improvement has been desired for solving the above-mentioned problems.

It is the object of the present invention to solve the foregoing problems of the prior art.

## Summary of the Invention

Having made intensive studies in view of the aforementioned circumstances, the present inventors found out surprisingly that the conventional drawbacks could be overcome by preparing by a polyolefin in the presence of a catalyst containing such a specific solid catalyst component as will be described below and an organometallic compound, as essential components.

The present invention is concerned with a process of preparing a polyolefin by homopolymerizing or copolymerizing at least one olefin in the presence of a catalyst containing a solid catalyst component and an organometallic compound as essential components, the said solid catalyst component being a material obtained by contacting the following components [A], [B] and [C] with one another:

[A] a reaction product resulting from a contact reaction of a magnesium halide and a titanium compound represented by the general formula $Ti(OR^1)_4$ where $R^1$ is a hydrocarbon group having 1 to 20 carbon atoms;

[B] a reaction product resulting from a contact reaction of an aluminum halide and a silicon compound represented by the general formula $Si(OR^2)_4$ where $R^2$ is a hydrocarbon group having 1 to 20 carbon atoms; and

[C] an organoaluminum compound represented by the general formula $AlR^3_nX_{3-n}$ where $R^3$ is a hydrocarbon group having 1 to 20 carbon atoms, X is a halogen atom and n is $O < n \leqq 3$.

The polyolefin preparing process using such specific catalyst according to the present invention has the following excellent features:

(1) A polyolefin, especially an ultra-high molecular weight polyethylene, having a small average particle diameter and a narrow particle size distribution and being relatively spherical and superior in free fluidity is obtained in high activity.

(2) A polyolefin having a high bulk density is obtained without formulation of coarse particles.

## Detailed Description of the Invention

The present invention will be described in detail hereinunder. The present invention relates to a polyolefin preparing process characterized by using a catalyst containing a solid catalyst component which is a material obtained by mutually contacting a contact reaction product (component A) of a magnesium halide and a titanium compound of the general formula $Ti(OR^1)_4$, a contact reaction product (component B) of an aluminum halide and a silicon compound of the general formula $Si(OR^2)_4$ and an organoaluminum compound (component C) of the general formula $AlR^3_nX_{3-n}$.

[Component A]

As the magnesium halide used in the present invention there usually is employed a substantially anhydrous one represented by the formula $MgX_2$ where X is a halogen. Examples are magnesium fluoride, magnesium chloride, magnesium bromide, magnesium iodide, and mixtures thereof, with magnesium chloride being particularly preferred.

These magnesium halides may be treated in advance with an electron donor such as alcohols, ketones, carboxylic acids, ethers, amines or phosphines.

The titanium compound used in the present invention is a compound of the general formula $Ti(OR^1)_4$ where $R^1$ is a hydrocarbon group having 1 to 20, preferably 1 to 8, carbon atoms. As examples of such hydrocarbon group there are mentioned alkyl, aryl and aralkyl groups. More concrete examples include tetramethoxytitanium, tetraethoxytitanium, tetraisopropoxytitanium, tetrapropoxytitanium, tetrabutoxytitanium, tetrapentoxytitanium, tetra-2-ethylhexyloxytitanium, tetraphenoxytitanium and tetrabenzyloxytitanium, with tetrapropoxytitanium and tetrabutoxytitanium being particularly preferred.

Conditions for the reaction of the magnesium halide and the titanium compound are not specially limited, but according to a preferred method, both are mixed and reacted together under heating at a temperature of 20° to 200°C, preferably 50° to 200°C, for 5 minutes to 10 hours, preferably 10 minutes to 2 hours. These operations should preferably be performed in an inert gas (e.g. nitrogen gas or helium) and moisture should be avoided as far as possible.

The reaction ratio of the magnesium halide to the titanium compound is in the range of 0.05 to 10, preferably 0.1 to 5, in terms of Mg/Ti (mole ratio).

[Component B]

As the aluminum halide used in the present invention there usually is employed a substantially anhydrous one represented by the formula $AlX_3$ where X is a halogen atom. Examples are aluminum fluoride, aluminum chloride, aluminum bromide and aluminum iodide, with aluminum chloride being particularly preferred.

The silicon compound used in the present invention is a compound of the general formula $Si(OR^2)_4$ where $R^2$ is a hydrocarbon group having 1 to 20, preferably 1 to 8, carbon atoms. As examples of such hydrocarbon group there are mentioned alkyl, aryl and aralkyl groups. More concrete examples include tetramethoxysilane, tetraethoxysilane, tetrapropoxysilane, tetrabutoxysilane, tetrahexyloxysilane, tetradecyloxysilane, tetraphenoxysilane, tetrabenzyloxysilane and tetratolyloxysilane. Particularly, tetraethoxysilane, tetrapropoxysilane and tetrabutoxysilane are preferred.

How to react the aluminum halide and the organosilicon compound is not specially limited, but preferably both are mixed and reacted together under heating at a temperature of -20° to 200°C, preferably -10° to 200°C, for 5 minutes to 10 hours, preferably 10 minutes to 5 hours, in an inert hydrocarbon solvent (e.g. hexane, heptane or cyclohexane). Of course, these operations should be performed in an inert gas (e.g. nitrogen gas or helium), and moisture should be avoided as far as possible.

The reaction ratio of the aluminum halide to the silicon compound is in the range of 0.01 to 10, preferably 0.1 to 5, in terms of $Al/Si(OR^2)_4$ (mole ratio).

[Component C]

The organoaluminum compound used in the present invention is a compound represented by the general formula $AlR^3_nX_{3-n}$ where $R^3$ is a hydrocarbon group having 1 to 20, preferably 1 to 8, carbon atoms. As examples of such hydrocarbon group there are mentioned alkyl, aryl and aralkyl groups. In the same formula, X represents a halogen atom, examples of which include chlorine, bromine and iodine. Further, in the same formula, n represents a number which satisfies the relation of $0 < n \leq 3$, preferably $1 \leq n \leq 3$. In such organoaluminum compound, n in the formula is not limited to an integer. For example, sesqui-compounds with n = 1.5 such as those represented by the general formula $R^3_{1.5}AlX_{1.5}$, i.e. $R^3_3Al_2X_3$, may also be used. As more concrete examples of the organoaluminum compound used in the invention there are mentioned triethylaluminum, triisobutylaluminum, triisopropylaluminum, tri-sec-butylaluminum, tri-tert-butylaluminum, trihexylaluminum, trioctylaluminum, diethylaluminum chloride, diisopropylaluminum chloride, ethyldipropylaluminum, dimethylaluminum chloride, diethylaluminum chloride, diisopropylaluminum chloride, methylethylaluminum chloride, dibutoxyaluminum chloride, triphenylaluminum, diphenylaluminum chloride, methylaluminum dichloride, ethylaluminum dichloride, propylaluminum dichloride, butylaluminum dichloride, ethylaluminum sesquichloride, methylaluminum sesquichloride, diethylaluminum iodide, diisopropylaluminum iodide, ethyldipropylaluminum, dimethylaluminum iodide, diethylaluminum iodide, diisopropylaluminum iodide, methylethylaluminum iodide, dibutoxyaluminum iodide, triphenylaluminum, diphenylaluminum iodide, methylaluminum diiodide, ethylaluminum diiodide, propylaluminum diiodide, butylaluminum diiodide, diethylaluminum fluoride, diisopropylaluminum fluoride, ethyldipropylaluminum, dimethylaluminum, dimethylaluminum fluoride, diethylaluminum fluoride, diisopropylaluminum fluoride, methylethylaluminum fluoride, dibutoxyaluminum fluoride, triphenylaluminum, diphenylaluminum fluoride, methylaluminum difluoride, ethylaluminum difluoride, propylaluminum difluoride, butylaluminum difluoride, diethylaluminum bromide, diisopropylaluminum bromide, ethyldipropylaluminum, dimethylaluminum bromide, diethylaluminum bromide, diisopropylaluminum bromide, methylethylaluminum bromide, dibutoxyaluminum bromide, triphenylaluminum, diphenylaluminum bromide, methylaluminum dibromide, ethylaluminum dibromide, propylaluminum dibromide and butylaluminum dibromide, with triethylaluminum and diethylaluminum chloride being particularly preferred.

The solid catalyst component used in the present invention is obtained by contacting the components A, B and C with one another. As to in what order the components are to be reacted, there may be adopted any of the following methods: (1) a method wherein components A and B are first contacted with each other, followed by contact with component C; (2) a method wherein components B and C are first contacted with each other, followed by contact with component A; and (3) a method wherein components C and A are first contacted with each other, followed by contact with component B. The method (1) is particularly preferred. Further, as to the contact reaction between components A and B, it is optional whether a method wherein component B is added into component A or a method wherein component A is added into component B is adopted. However the latter method is preferred.

Conditions for the contact of components A, B and C are not specially limited, but according to a preferred method, mixing is performed under heating at a temperature of -20° to 200°C, preferably -10° to 200°C, for 5 minutes to 10 hours, preferably 10 minutes to 2 hours, in an inert hydrocarbon solvent (e.g. hexane, heptane, toluene or cyclohexane), followed by washing with an inert hydrocarbon solvent. It goes without saying that these operations should preferably be conducted in an inert gas (e.g. nitrogen or helium) and that moisture should be avoided as far as possible.

The amount of component B used in the present invention is 0.01 to 10 g, preferably 0.5 to 5 g, per gram of component A.

The amount of component C used in the present invention is 0.01 to 100 millimols, preferably 0.1 to 50 millimols, per gram of the product obtained from components A and B.

The solid catalyst component thus obtained is combined with an organometallic compound for use in the preparation of a polyolefin.

[Organometallic Compound]

As the organometallic compound used in the present invention there may be used an organometallic compound of a Group I to Group I to Group IV metal in the Periodic Table which is known as a component of a Ziegler type catalyst. Particularly, organoaluminum compounds and organozinc compounds are preferred. As examples of such compounds there are mentioned organoaluminum compounds of the general formulae $R_3Al$, $R_2AlX$, $RAlX_2$, $R_2AlOR$, $RAl(OR)X$ and $R_3Al_2X_3$ where Rs, which may be the same or different, are each an alkyl, aryl or aralkyl group having 1 to 20, preferably 1 to 8, carbon atoms such as methyl, ethyl, propyl, butyl, hexyl or octyl as alkyl, phenyl or tolyl as aryl or benzyl as aralkyl, and X is a halogen atom such as chlorine, bromine, iodine or fluorine, as well as organozinc compounds of the general formula $R_2Zn$ where R is an alkyl, aryl or aralkyl group having 1 to 20, preferably 1 to 8, carbon atoms such as methyl, ethyl, propyl, butyl, hexyl or octyl as alkyl, phenyl or tolyl as aryl or benzyl as aralkyl. More concrete examples are trimethylaluminum, triethylaluminum, triisopropylaluminum, triisobutylaluminum, tri-sec-butylaluminum, tri-tert-butylaluminum, trihexylaluminum, trioctylaluminum, dimethylaluminum chloride, diethylaluminum chloride, diisopropylaluminum chloride, dimethylaluminum ethoxide, diethylaluminum ethoxide, methylmethoxyaluminum chloride, ethylmethoxyaluminum chloride, methylethoxyaluminum chloride, ethylethoxyaluminum chloride, ethylaluminum sesquichloride, diethylzinc, and mixtures thereof, with triethylaluminum being preferred.

The amount of the organometallic compound to be used is not specially limited, but usually it is employable in an amount of 0.1 to 1,000 moles per mole of the titanium compound.

In the present invention, the organometallic compound may be used as a mixture or addition compound thereof with an organic acid ester.

In the case where the organometallic compound is used as a mixture thereof with an organic acid ester, the organic acid ester is used usually in an amount of 0.1 to 1 mole, preferably 0.2 to 0.5 mole, per mole of the organometallic compound. In the case of using it as an addition compound with the organic acid ester, it is preferable that the organometallic compound : organic acid ester mole ratio be in the range of 2:1 to 1:2.

The said organic acid ester is an ester of a saturated or unsaturated, mono- or dibasic organocarboxylic acid having 1 to 24 carbon atoms with an alcohol having 1 to 30 carbon atoms.

Examples are methyl formate, ethyl acetate, amyl acetate, phenyl acetate, octyl acetate, methyl methacrylate, ethyl stearate, methyl benzoate, ethyl benzoate, n-propyl benzoate, isopropyl benzoate, butyl benzoate, hexyl benzoate, cyclopentyl benzoate, cyclohexyl benzoate, phenyl benzoate, 4-tolyl benzoate, methyl salicylate, ethyl salicylate, ethyl p-hydroxybenzoate, phenyl salicylate, cyclohexyl p-hydroxybenzoate, benzyl salicylate, ethyl o-resorcinol-carboxylate, methyl anisate, phenyl anisate, benzyl anisate, methyl p-ethoxybenzoate, methyl p-toluylate, ethyl p-toluylate, phenyl p-toluylate, ethyl o-toluylate, ethyl m-toluylate, methyl p-aminobenzoate, ethyl p-aminobenzoate, vinyl benzoate, allyl benzoate, benzyl benzoate, methyl naphthoate and ethyl naphthoate. Particularly preferred are alkyl esters of benzoic acid, o- or p-toluic acid or anisic acid, especially methyl and ethyl esters.

The polymerization of olefin using the catalyst in the present invention, can be conducted in the form of a slurry polymerization, a solution polymerization or a vapor-phase polymerization. Particulary, the catalyst used in the present invention is suitable for a slurry polymerization. The polymerization reaction is performed in the same ways in the conventional olefin polymerization reaction using a Ziegler type catalyst. More specifically, ethylene is polymerized in a substantially oxygen- and water-free condition, in the presence of an inert hydrocarbon and at a hydrogen concentration of 0 to 20 mole%, preferably 0-10 mole%, to prepare an ultra-high molecular weight polyethylene. In this case, conditions for the polymerization involve a temperature of 0° to 120°, preferably 20° to 100°C, and a pressure of 0 to 70 kg/cm$^2$G, preferably 0 to 60 kg/cm$^2$G.

As examples of the inert hydrocarbon there are mentioned saturated hydrocarbons such as butane, pentane, hexane, heptane, octane and cyclohexane, as well as aromatic hydrocarbons such as benzene, toluene and xylene. Further, where required in connection with molding of the resulting ultra-high molecular weight polyethylene, mention may also be made of high-boiling organic solvents such as decalin, tetralin, decane and kerosene.

The process of the present invention is applicable to the polymerization of all the olefins capable of being polymerized using a Ziegler type catalyst.

Particularly, $\alpha$-olefins having 2 to 12 carbon atoms are preferred. For example, the process of the invention is suitable for the homopolymerization of such $\alpha$-olefins as ethylene, propylene, 1-butene, hexene-1 and 4-methylpentene-1, copolymerization of ethylene and $\alpha$-olefins having 3 to 12 carbon atoms such as ethylene/propylene, ethylene/1-butene, ethylene/hexene-1 and ethylene/4-methylpentene-1, copolymerization of propylene and butene-1, and copolymerization of ethylene and other two or more $\alpha$-olefins. Copolymerization with a diene for modification of the polyolefin is also preferred.

The process of the present invention is extremely suitable for the preparation of an ultra-high molecular weight polyethylene.

Usually, such an ultra-high molecular weight polyethylene is prepared by the homopolymerization of ethylene or the copolymerization of ethylene and an $\alpha$-olefin exemplified above.

A comonomer content in this copolymerization can be selected suitably, but usually it excess 0 and is not higher than 20 mole%, and preferably exceeds 0 and is not higher than 15 mole%. Of course, copolymerization with $\alpha$-olefins there are mentioned propylene, butene-1, hexene-1 and 4-methylpentene-1, while as examples of such dienes there are mentioned butadiene, 1,4-hexadiene, ethyl norbornene and dicyclopentadiene.

Such ultra-high molecular weight polyethylene has an intrinsic viscosity of usually 6 to 50 dl/g, preferably 8 to 30 dl/g, in decalin at 135°C, corresponding to a molecular weight of 600,000 to 12,000,000 preferably 900,000 to 6,000,000.

Adjustment of the molecular weight can be done to some extent by changing polymerization conditions such as polymerization temperature and catalyst mole ratio, but the addition of hydrogen into the polymerization system is more effective for this purpose. Of course, using the catalyst prepared according to the present invention, a multi-stage polymerization reaction of two or more stages involving different polymerization conditions such as different hydrogen concentrations and different polymerization temperatures can be carried out without any trouble.

By the process of the present invention described above there can be obtained a polyolefin, especially an ultra-high molecular weight polyethylene, having a small average particle diameter, a narrow particle size distribution, a good free fluidity and high bulk density and with no formation of coarse particles.

[Examples]

The following examples are given to illustrate the present invention more concretely but is to be understood that the invention is not limited by those examples.

Example 1

(a) Preparation of Solid Catalyst Component

3.8 g of MgC1$_2$ and 27.0 ml of tetrabutoxytitanium were placed into a thoroughly dried 100 ml flask in a nitrogen atmosphere, and reaction was allowed to take place at 90°C for 2 hours under stirring. The resulting reaction product is designated component [A].

Next, 15 g of AlCl$_3$ and 10 ml of n-hexane were charged into a thoroughly dried 300 ml flask in a nitrogen atmosphere, and 40 ml of tetraethoxy silicate was added dropwise under stirring. The temperature was raised to 40°C and reaction was allowed to take place for 2 hours. The resulting reaction product is designated component [B].

The component [A] was dropwise added slowly into the component [B] while the component [B] was stirred at 40°C. After completion of the dropwise addition, the temperature was reduced to room temperature and the supernatant liquid was removed by decantation, followed by washing with five 200 ml portions of hexane to afford a catalyst system containing 1.6 wt% of titanium.

Next, a solution of 15 mmol of diethylaluminum chloride (component [C]) in 30 ml of hexane was dropwise added to the above catalyst system and reaction was allowed to take place at 40°C for 2 hours. Thereafter, the temperature was reduced to room temperature and the supernatant liquid was removed by decantation, followed by washing with two 100 ml portions of hexane to afford a solid catalyst component.

(b) Polymerization of Ethylene

1,000 ml of hexane, 1 mmol of triethylaluminum and 5 mg of the solid catalyst component prepared above were added successively in this order into a 2-liter autoclave at room temperature in a nitrogen atmosphere. Thereafter, the temperature was raised to 65°C and ethylene was fed under pressure to maintain the total pressure at 10 kg/cm$^2$G.

In this condition, polymerization was conducted for 1 hour to afford an ultra-high molecular weight polyethylene. Catalytic activity was 6,000g.polyethylene/g.solid catalyst.Hr.C$_2$H$_4$ pressure.

(c) Evaluation of Physical Properties

The ultra-high molecular weight polyethylene thus prepared was evaluated for physical properties by conventional methods; as a result, it was found to have a bulk density of 0.387 g/cm$^3$, an intrinsic viscosity (in decalin at 135°C) of 15.7 dl/g, an average particle diameter of 165 μm, a particle size distribution of 0.6 in terms of Span value and a high free fluidity. The Span value, which indicates the width of particle size distribution, had been determined from the following equation. The proportion of 300 μm, or larger particles was 0.5 wt%:

Span value = (D90 - D10)/Dave (The closer to zero, the narrower the particle distribution.)

D90 :  90 wt% particle dia. (μm)
D10 :  10wt% particle dia. (μm)
Dave :  average particle diameter (μm)

The resulting of such physical properties evaluation are as shown in Table 1.

Example 2

The procedure of Example 1 was repeated except that the amount of diethylaluminum chloride as component [C] was changed to 30 mmol.

The results of physical properties evaluation of the resulting polyethylene are as shown in Table 1.

Example 3

The procedure of Example 1 was repeated except that 15.0 mmol of triethylaluminum was used in place of diethylaluminum chloride as component [C]. The results of physical properties evaluation of the resulting polyethylene are as shown in Table 1.

Example 4

The procedure of Example 1 was repeated except that 15.0 mmol of triisobutylaluminum was used in place of diethylaluminum chloride as component [C]. The results of physical properties evaluation of the resulting polyethylene are as shown in Table 1.

Example 5

The procedure of Example 1 was repeated except that the tetraethoxy silicate used in the preparation of component [B] was replaced by 30 ml of tetrabutoxy silicate. The results of physical properties evaluation of the resulting polyethylene are as shown in Table 1.

Example 6

The procedure of Example 5 was repeated except that 20 mmol of diisobutylaluminum chloride was used in place of diethylaluminum chloride as component [C]. The results of physical properties evaluation of the resulting polyethylene are as shown in Table 1.

Example 7

The procedure of Example 1 was repeated except that the amount of tetrabutoxytitanium used in the preparation of component [A] was changed to 50 ml. The results of physical properties evaluation of the resulting polyethylene are as described in Table 1.

Comparative Example 1

The procedure of Example 1 was repeated except that the component [C] was not used. The results of physical properties evaluation of the resulting polyethylene are as described in Table 1.

Comparative Example 2

The procedure of Example 5 was repeated except that the component [C] was not used. The results of physical properties evaluation are as described in Table 1.

Comparative Example 3

The procedure of Example 7 was repeated except that the component [C] was not used. The results of physical properties evaluation of the resulting polyethylene are as described in Table 1.

Example 8

The procedure of Example 1 was repeated except that the tetrabutoxytitanium used in the preparation of component [A] was replaced by 24 ml of tetraisopropoxytitanium. The results of physical properties evaluation of the resulting polyethylene are as described in Table 2.

Comparative Example 4

The procedure of Example 8 was repeated except that the component [C] was not used. The results of physical properties evaluation of the resulting polymer are as described in Table 2.

Example 9

The procedure of Example 1 was repeated except that 27 ml of tetrabutoxytitanium used in the preparation of component [A] was replaced by both 15 ml of tetrabutoxytitanium and 30 ml of tetraphenoxytitanium. The results of physical properties evaluation of the resulting polyethylene are as described in Table 2.

Comparative Example 5

The procedure of Example 9 was repeated except that the component [C] was not used. The results of physical properties evaluation of the resulting polyethylene are as described in Table 2.

Example 10

The procedure of Example 1 was repeated except that 40 ml of tetraethoxy silicate used in the preparation of component [B] was replaced by both 20 ml of tetraethoxy silicate and 20 ml of tetraphenoxy silicate. The results of physical properties evaluation of the resulting polyethylene are as described in Table 2.

Comparative Example 6

The procedure of Example 10 was repeated except that the component [C] was not used. The results of physical properties evaluation of the resulting polyethylene are as described in Table 2.

Example 11

The procedure of Example 1 was repeated except that 10g of butene-1 was added in the ethylene polymerization (b). The results of physical properties evaluation of the resulting ethylene/butene-1 copolymer are as described in Table 3.

Table 1     Results of Physical Properties Evaluation

| | Catalyst Component (A) MgCl$_2$ Ti(OR)$_4$ | | Catalyst Component (B) AlCl$_3$ Si(OR)$_4$ | | Catalyst Component (C) Organo-aluminum | Catalytic Activity g.PE/g. cat·h· ethylene pressure | Bulk Density g/cm$^3$ | Average Particle Diameter μm | Span Value | 600 μm or larger wt% | Intrinsic Viscosity [η] dl/g |
|---|---|---|---|---|---|---|---|---|---|---|---|
| | g | ml | g | ml | m mol | | | | | | |
| Example 1 | 3.8 | 27.0 tetrabutoxy-titanium | 15 | 40 tetraethoxy silicate | 15.0 Et$_2$AlCl | 6,000 | 0.387 | 165 | 0.6 | 0.5 | 15.7 |
| Example 2 | 3.8 | 27.0 tetrabutoxy-titanium | 15 | 40 tetraethoxy silicate | 30.0 Et$_2$AlCl | 7,500 | 0.385 | 170 | 0.7 | 0.7 | 15.6 |
| Example 3 | 3.8 | 27.0 tetrabutoxy-titanium | 15 | 40 tetraethoxy silicate | 15.0 Et$_3$Al | 5,100 | 0.390 | 164 | 0.7 | 0.5 | 16.0 |
| Example 4 | 3.8 | 27.0 tetrabutoxy-titanium | 15 | 40 tetraethoxy silicate | 15.0 iBu$_3$Al | 6,600 | 0.385 | 1691 | 0.7 | 0.5 | 15.9 |
| Example 5 | 3.8 | 27.0 tetrabutoxy-titanium | 15 | 30 tetrabutoxy silicate | 15.0 Et$_2$AlCl | 4,500 | 0.383 | 155 | 0.8 | 0.7 | 14.9 |
| Example 6 | 3.8 | 27.0 tetrabutoxy-titanium | 15 | 30 tetrabutoxy silicate | 20.0 iBu$_2$AlCl | 4,200 | 0.388 | 155 | 0.7 | 0.7 | 14.6 |
| Example 7 | 3.8 | 50.0 tetrabutoxy-titanium | 15 | 40 tetraethoxy silicate | 15.0 Et$_2$AlCl | 6,500 | 0.380 | 167 | 0.7 | 0.7 | 15.0 |
| Comparative Example 1 | 3.8 | 27.0 tetrabutoxy-titanium | 15 | 40 tetraethoxy silicate | not used | 4,000 | 0.340 | 160 | 2.0 | 1.3 | 15.7 |

Table 1　　· - continued -

| | Catalyst Component (A) MgCl$_2$ Ti(OR)$_4$ | | Catalyst Component (B) AlCl$_3$ Si(OR)$_4$ | | Catalyst Component(C) Organo- aluminum | Catalytic Activity g.PE/g. cat·h· ethylene pressure | Bulk Density | Average Particle Diameter | Span Value | 600 μm or larger | Intrinsic Viscosity ( η ) |
|---|---|---|---|---|---|---|---|---|---|---|---|
| | g | ml. | g | ml | m mol | | g/cm$^3$ | μm | | wt% | dl/g |
| Comparative Example 2 | 3.8 tetrabutoxy- titanium | 27.0 | 15 tetrabutoxy silicate | 30 | not used | 1,500 | 0.350 | 166 | 2.5 | 2.0 | 14.5 |
| Comparative Example 3 | 3.8 tetrabutoxy- titanium | 50.0 | 15 tetraethoxy silicate | 40 | not used | 4.000 | 0.305 | 164 | 3.1 | 2.3 | 15.5 |

Et = C$_2$H$_5$

iBu = iso-C$_4$H$_7$

Table 2    Results of Physical Properties Evaluation

| | Catalyst Component (A) MgCl$_2$ Ti(OR)$_4$ | | Catalyst Component (B) AlCl$_3$ Si(OR)$_4$ | | Catalyst Component (C) Organo-aluminum | Catalytic Activity g.PE/g. cat·h· ethylene pressure | Bulk Density g/cm$^3$ | Average Particle Diameter $\mu$m | Span Value | 600 $\mu$m or larger wt% | Intrinsic Viscosity [$\eta$] dl/g |
|---|---|---|---|---|---|---|---|---|---|---|---|
| | g | ml | g | ml | m mol | | | | | | |
| Example 8 | 3.8 tetra-isopropoxy-titanium | 24.0 | 15 tetraethoxy silicate | 40 | 15.0 Et$_2$AlCl | 4,000 | 0.381 | 160 | 0.7 | 0.6 | 14.0 |
| Comparative Example 4 | 3.8 tetra-isopropoxy-titanium | 24.0 | 15 tetraethoxy silicate | 40 | not used | 3,000 | 0.300 | 155 | 2.0 | 3.5 | 14.5 |
| Example 9 | 3.8 tetrabutoxy-titanium 30.0 tetraphenoxy-titanium | 15.0 | 15 tetraethoxy silicate | 40 | 15.0 Et$_2$AlCl | 5,100 | 0.378 | 170 | 0.7 | 0.7 | 16.2 |
| Comparative Example 5 | 3.8 tetrabutoxy-titanium 30.0 tetraphenoxy-titanium | 15.0 | 15 tetraethoxy silicate | 40 | not used | 4,500 | 0.299 | 170 | 3.9 | 5.2 | 16.3 |

EP 0 581 611 A2

Table 2    - continued -

| | Catalyst Component (A) MgCl₂ Ti(OR)₄ | | Catalyst Component (B) AlCl₃ Si(OR)₄ | | Catalyst Component (C) Organo-aluminum | Catalytic Activity g.PE/g. cat·h· ethylene pressure | Bulk Density | Average Particle Diameter | Span Value | 600 μm or larger | Intrinsic Viscosity (η) |
|---|---|---|---|---|---|---|---|---|---|---|---|
| | g | ml | g | ml | m mol | | g/cm³ | μm | | wt% | dl/g |
| Example 10 | 3.5 tetrabutoxy-titanium | 27.0 | 15 tetraethoxy silicate | 20 | 15.0 Et₂AlCl | 5,500 | 0.379 | 174 | 0.8 | 0.8 | 14.6 |
| | | | 20 tetraphenoxy silicate | | | | | | | | |
| Comparative Example 6 | 3.5 tetrabutoxy-titanium | 27.0 | 15 tetraethoxy silicate | 20 | not used | 4,000 | 0.229 | 172 | 4.0 | 3.5 | 15.0 |
| | | | 20 tetraphenoxy silicate | | | | | | | | |

11

Table 3    Results of Physical Properties Evaluation

| | Catalyst Component [A] MgCl$_2$ Ti(OR)$_4$ | | Catalyst Component [B] AlCl$_3$ Si(OR)$_4$ | | Catalyst Component [C] Organo-aluminum | Catalytic Activity g·PE/g·cat·h·ethylene pressure | Bulk Density g/cm$^3$ | Average Particle Diameter μm | Span Value | 600 μm or larger wt% | Intrinsic Viscosity [η] dl/g |
|---|---|---|---|---|---|---|---|---|---|---|---|
| | g | ml | g | ml | m mol | | | | | | |
| Example 11 | 3.8 tetrabutoxy-titanium | 27.0 | 15 tetraethoxy silicate | 40 | 15.0 Et$_2$AlCl | 6,100 | 0.390 | 165 | 0.6 | 0.5 | 14.6 |

## Claims

1. A process of preparing a polyolefin by homopolymerizing or copolymerizing at least one olefin in the presence of a catalyst containing a solid catalyst component and an organometallic compound as essential components, said solid catalyst component being a material obtained by contacting the following components [A], [B] and [C] with one another:

12

[A] a reaction product resulting from a contact reaction of a magnesium halide and a titanium compound represented by the general formula $Ti(OR^1)_4$ where $R^1$ is a hydrocarbon group having 1 to 20 carbon atoms; and

[B] a reaction product resulting from a contact reaction of an aluminum halide and a silicon compound represented by the general formula $Si(OR^2)_4$ where $R^2$ is a hydrocarbon group having 1 to 20 carbon atoms; and

[C] an organoaluminum compound represented by the general formula $AlR^3_nX_{3-n}$ where $R^3$ is a hydrocarbon group having 1 to 20 carbon atoms, X is a halogen atom and n is $0 < n < 3$.

2.  A process as set forth in claim 1, wherein a reaction ratio of the magnesium halide to the titanium compound is in the range of 0.05 to 10 in terms of Mg/Ti (mole ratio).

3.  A process as set forth in claim 1 or claim 2, wherein a reaction ratio of the aluminum halide to the silicon compound is in the range of 0.01 to 10 in terms of $Al/Si(OR^2)_4$ (mole ratio).

4.  A process as set forth in any one of claims 1 to 3, wherein the amount of the component [B] used is in the range of 0.01 to 10 grams per gram of the component [A].

5.  A process as set forth in any one of claims 1 to 4, wherein the amount of the component [C] used is in the range of 0.01 to 100 millimoles per gram of a catalyst system obtained from the components [A] and [B].

6.  A process as set forth in any one of claims 1 to 5, wherein the solid catalyst component is obtained by contacting the components [A] and [B] and then contacting the resulting reaction product with the component [C].

7.  A process as set forth in any one of claims 1 to 6, wherein the organometallic compound is an organoaluminum compound or an organozinc compound.